# EUROPEAN PATENT APPLICATION

(11) **EP 2 293 126 A1**
(43) Date of publication of application: **09.03.2011**
(21) Application number: 09773436.2
(22) Date of filing: 29.06.2009
(51) Int. Cl.: G02B 6/032, G02B 6/00, G02B 6/036

(54) **HOLEY FIBER**

(30) Priority: 02.07.2008 JP 2008173632
(71) Applicant: The Furukawa Electric Co., Ltd., Chiyoda-ku Tokyo 100-8322 (JP)
(72) Inventor: MUKASA, Kazunori, Tokyo 100-8322 (JP)
(74) Representative: Jackson, Martin Peter
(86) International application number: PCT/JP2009/061852
(87) International publication number: WO 2010/001858

(57) **Abstract**

A core portion positioned at a center; and a cladding portion positioned around a periphery of the core portion and including holes formed in layers around the core portion are included, wherein the holes are arranged to form a triangular lattice, and when a diameter of each hole is d [µm] and a lattice constant of the triangular lattice is A [µm], d/A is in a range of 0.43 ± 0.03, A is 20 to 24 micrometers, a single-mode operation is demonstrated at a wavelength of 1550 nanometers, and an effective core area is equal to or larger than 500 µm² at the wavelength of 1550 nanometers. Consequently, a holey fiber is provided, which has a single-mode operation characteristic and a practical bending-loss characteristic while having low nonlinearity.

## Description

### TECHNICAL FIELD

The present invention relates to a holey fiber.

### BACKGROUND ART

Holey fibers or photonic crystal fibers are a new type of optical fibers each having a core portion positioned at a center, and a cladding portion positioned around a periphery of the core portion and including plural holes arranged around the core portion, where the holes reduce an average refractive index of the cladding portion, and the core portion is caused to propagate light by using the principle of total reflection of light. By controlling the refractive index using the holes, holey fibers are able to achieve the endlessly single mode (ESM) that conventional optical fibers are unable to achieve, and to achieve unique characteristics such as a zero-dispersion wavelength shifted to an extremely-short-wavelength side. The ESM means that a cutoff wavelength does not exist, lights of all wavelengths are transmitted in a single mode, and the ESM is a characteristic that makes optical transmission at a high transmission speed over a broad band possible.

Because it is possible to reduce optical nonlinearity in a holey fiber by increasing an effective core area, application of the holey fiber to optical communications or to delivery of transmitting high-power light as low-nonlinearity transmission media is also hoped for. Particularly, if a holey fiber is used, it is possible to achieve an effective core area equal to or larger than 500 µm², which is hardly achieved by conventional optical fibers. For example, in Non-patent Literature 1, a holey fiber (a photonic crystal fiber) is disclosed, in which a diameter of a core portion is increased to 20 micrometers or more and an effective core area is increased to 500 µm² or more.

### PRIOR ART DOCUMENT

### NONPATENT LITERATURE

Nonpatent Literature 1: M.D. Nielsen et al., "Predicting macrobending loss for large-mode area photonic crystal fibers", OPTICS EXPRESS, Vol.12, No.8, pp.1775-1779 (2004)

### DISCLOSURE OF INVENTION

### PROBLEM TO BE SOLVED BY THE INVENTION

However, in the conventional holey fibers, the ESM characteristics may not be achieved although the optical nonlinearity is reduced when the effective core area is increased, and thus the conventional holey fibers do not infallibly demonstrate a single-mode operation. Therefore, a conventional holey fiber having an increased effective core area has a risk of demonstrating a multimode operation and the quality of transmitted light being degraded. Further, when the effective core area is increased, the bending loss increases in response to it.

The present invention has been achieved in view of the above, and an object of the invention is to provide a holey fiber having a single-mode operation characteristic and a practical bending-loss characteristic with low nonlinearity.

### MEANS FOR SOLVING PROBLEM

To solve the above problems and achieve the object, the holey fiber according to the present invention includes: a core portion positioned at a center; and a cladding portion positioned around a periphery of the core portion and including holes formed in layers around the core portion, wherein the holes are arranged to form a triangular lattice, and when a diameter of each hole is d [µm] and a lattice constant of the triangular lattice is A [µm], d/A is in a range of 0.43 ± 0.03, A is 20 to 24 micrometers, a single-mode operation is demonstrated at a wavelength of 1550 nanometers, and an effective core area is equal to or larger than 500 µm² at the wavelength of 1550 nanometers.

Further, the holey fiber according to the present invention is characterized in that in the above invention, d/A is in a range of 0.43 ± 0.02.

Further, the holey fiber according to the present invention is characterized in that in the above invention, the number of the layers of holes is equal to or greater than four.

Further, the holey fiber according to the present invention is characterized in that in the above invention, a confinement loss at a wavelength equal to or less than 1650 nanometers is equal to or less than 0.001 dB/km.

Further, the holey fiber according to the present invention is characterized in that in the above invention, an absolute value of wavelength dispersion at the wavelength of 1550 nanometers is equal to or smaller than 24 ps/nm/km.

Further, the holey fiber according to the present invention is characterized in that in the above invention, A is equal to or less than 23 micrometers, d/A is equal to or greater than 0.43, the number of the layers is equal to or greater than five, and a bending loss at a diameter of 100 millimeters at the wavelength of 1550 nanometers is equal to or less than 10 dB/m.

### EFFECT OF THE INVENTION

According to the present invention, it is possible to realize a holey fiber having a single-mode operation characteristic and a practical bending-loss characteristic with low nonlinearity.

### BRIEF DESCRIPTION OF DRAWINGS

[Fig. 1] Fig. 1 is a schematic cross-sectional diagram of an HF according to an embodiment of the present invention.
[Fig. 2] Fig. 2 depicts a relationship between A and V values at a wavelength of 1550 nanometers when a ratio d/A is changed for an HF having a similar structure to that of the HF illustrated in Fig. 1.
[Fig. 3] Fig. 3 depicts a relationship between Λ, and an effective core area and a bending loss at a wavelength of 1550 nanometers, when d/A is fixed at 0.43 for the HF illustrated in Fig. 1.
[Fig. 4] Fig. 4 depicts field distributions of light having a wavelength of 1550 nanometers when bending of a diameter of 100 millimeters is given to the HF illustrated in Fig. 1.
[Fig. 5] Fig. 5 depicts a relationship between the number of hole layers and a confinement loss at a wavelength of 1550 nanometers when A is changed in the HF illustrated in Fig. 1 and in HFs having a similar structure to that of the HF but having the number of hole layers equal to three or four.
[Fig. 6] Fig. 6 depicts a relationship between the wavelength and confinement loss in the HF illustrated in Fig. 5.
[Fig. 7] Fig. 7 depicts a relationship between the number of hole layers, and the effective core area and wavelength dispersion at a wavelength of 1550 nanometers when A is changed in the HF illustrated in Fig. 5.
[Fig. 8] Fig. 8 depicts design parameters and optical characteristics of HFs in calculation examples 1 to 13 calculated using an FEM simulation.
[Fig. 9] Fig. 9 is a photograph of a cross-sectional structure of a manufactured HF according to Example 1.
[Fig. 10] Fig. 10 depicts design parameters and measured optical characteristics of HFs according to Examples 1 and 2.

### BEST MODE(S) FOR CARRYING OUT THE INVENTION

Exemplary embodiments of a holey fiber according to the present invention will be explained below in detail with reference to the accompanying drawings. The present invention is not limited by these embodiments. The holey fiber is described as "HF" herein. In addition, the terms not particularly defined in the present specification follow the definitions and measuring methods according to the ITU-T (International Telecommunication Union) G.650.1.

### (Embodiment)

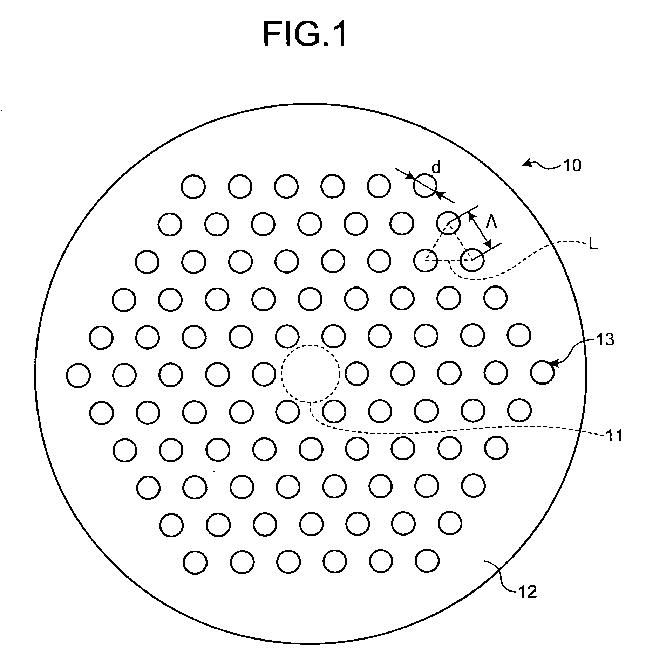

Fig. 1 is a schematic cross-sectional diagram of an HF according to an embodiment of the present invention. As illustrated in Fig. 1, an HF 10 includes a core portion 11 positioned at a center thereof, and a cladding portion 12 positioned around a periphery of the core portion 11. The core portion 11 and the cladding portion 12 are made of pure silica glass not added with a dopant for adjusting a refractive index.

The cladding portion 12 has holes 13 formed in layers around the core portion 11. If a combination of the holes 13 arranged at each apex and on each side of an equilateral hexagon around the core portion 11 corresponds to one layer, the number of layers of holes 13 in the HF 10 is five. Further, the holes 13 are formed in layers to form a triangular lattice L. The diameter of the holes 13 is d, and the lattice constant of the triangular lattice L, that is, a distance between the centers of the holes 13 is A.

In the HF 10, d/A, which is a ratio of d to A, is 0.43 ± 0.03, and A is 20 to 24 micrometers. The HF 10 demonstrates a single-mode operation at a wavelength of 1550 nanometers, and has an effective core area equal to or larger than 500 µm² at the wavelength of 1550 nanometers. As a result, the HF 10 has a single-mode operation characteristic with low nonlinearity at the wavelength of 1550 nanometers. Further, the HF 10 has a bending loss equal to or smaller than 250 dB/m at a diameter of 100 millimeters and thus if the HF 10 is wound around a bobbin for winding an optical fiber normally used in optical communications and the like, the HF 10 has a practical bending-loss characteristic with which light is able to be transmitted.

Further, in the HF 10, a confinement loss, which is a loss generated due to a leakage of light from the core portion 11 to a gap between the holes 13, is equal to or less than 0.001 dB/km at a wavelength equal to or less than 1650 nanometers, which is sufficiently small such that there is substantially no influence on a transmission loss.

The present invention is explained more specifically with reference to calculation results using a finite element method (FEM) simulation. The term "bending loss" below refers to a bending loss at the diameter of 100 millimeters.

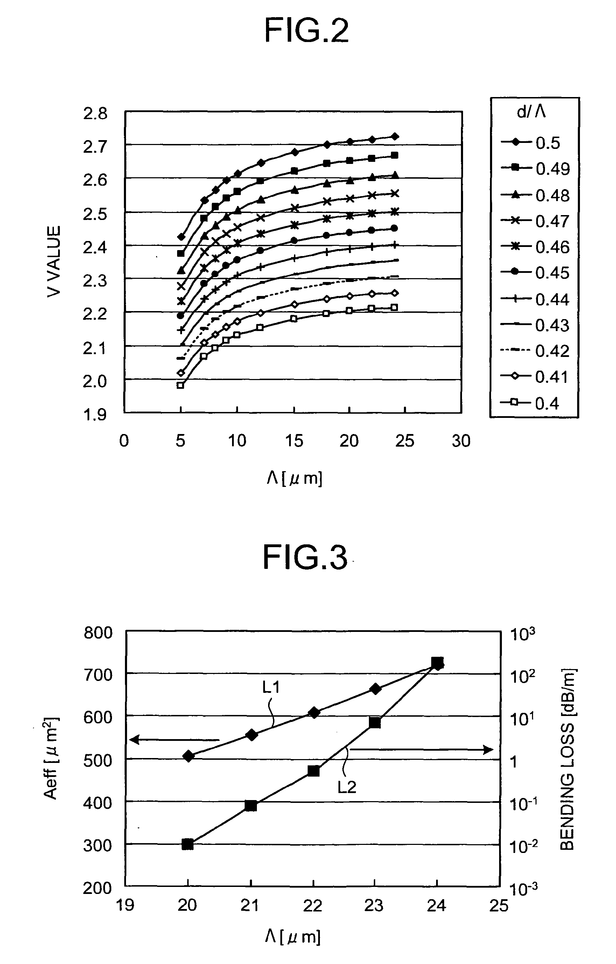

The single-mode operation characteristic is explained first. Fig. 2 depicts a relationship between A and V values at a wavelength of 1550 nanometers when the ratio d/A is changed in an HF having a similar structure to that of the HF 10 illustrated in Fig. 1. A V value is a normalized frequency of an optical fiber, and when the V value of the optical fiber is equal to or smaller than 2.405, theoretically the optical fiber demonstrates a single-mode operation. Further, even with an optical fiber having a V value exceeding 2.405, if the optical fiber has a length equal to or longer than approximately 100 meters, which is a length used in practice, light of a higher-order mode disappears by leaking in the midst of transmission, and thus it is known that if the V value is equal to or smaller than 2.5, the optical fiber substantially demonstrates a single-mode operation. In Fig. 2, a calculation method of the V value of the HF described in the reference, "Empirical relation for simple design of photonic crystal fibers" (K. Saitoh and M. Koshiba, OPTICS EXPRESS, Vol. 13, No. 1, pp. 267-274 (2005)), is used.

As illustrated in Fig. 2, when A is in a range of 5 to 24 micrometers, the V value becomes equal to or smaller than 2.405 if d/A is equal to or smaller than 0.43. Therefore, the HF 10 infallibly demonstrates a single-mode operation. When d/A is equal to or smaller than 0.46, the V value becomes equal to or smaller than 2.5, and thus the HF 10 substantially demonstrates a single-mode operation. When d/A is smaller than 0.43, the HF infallibly demonstrates a single-mode operation, but when d/A is decreased, the bending loss is increased if the same effective core area is attempted to be achieved, or the effective core area is decreased if the same bending loss is attempted to be achieved.

Therefore, like in the HF 10 according to the present embodiment, when d/A is 0.43 ± 0.03 and A is 20 to 24 micrometers, it is possible to achieve both: a preferable effective core area and a bending loss realizing low nonlinearity; and a single-mode operation characteristic at a wavelength of 1550 nanometers. Further, if d/A is 0.43 ± 0.02, it is possible to achieve a single-mode operation characteristic more infallibly and thus this is even more preferable.

The effective core area and the bending loss are explained next. Fig. 3 depicts a relationship between Λ, and an effective core area and a bending loss at a wavelength of 1550 nanometers, when d/A is fixed at 0.43 in the HF 10 illustrated in Fig. 1. In Fig. 3, "Aeff" represents the effective core area, a line L1 indicates a relationship between A and the effective core area, and a line L2 indicates a relationship between A and the bending loss. In Fig. 3, the effective core area is 504.5 µm² when A is 20 micrometers, and increases in response to the increase in A. Meanwhile, the bending loss also increases in response to the increase in A, and when A is 24 micrometers, the bending loss becomes 178 dB/m. That is, when d/A is 0.43, the HF 10 has the effective core area equal to or greater than 504.5 µm² and the bending loss equal to or less than 178 dB/m.

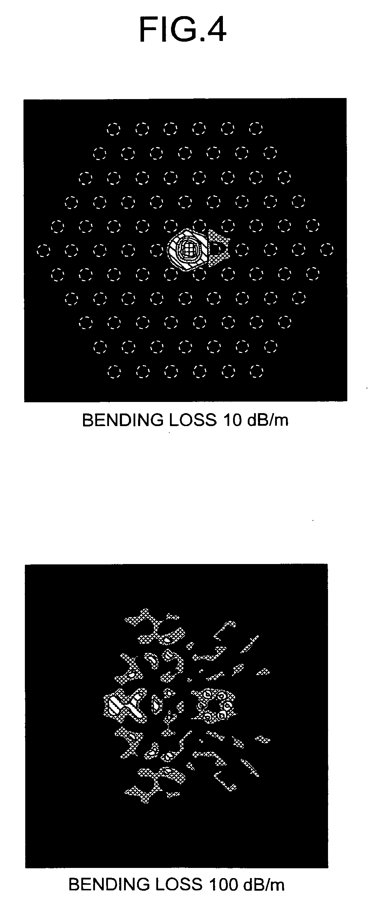

Fig. 4 depicts field distributions of light having a wavelength of 1550 nanometers when bending of a diameter of 100 millimeters is given to the HF 10 illustrated in Fig. 1. In Fig. 4, the upper diagram represents a field distribution when the bending loss is approximately 10 dB/m, and the lower diagram represents a field distribution when the bending loss is approximately 100 dB/m. In Fig. 4, intensity of the field at the center of the upper diagram is 1.0, and a different hatching is used to indicate, from the center, each range in which the intensity is attenuated by 0.1. In both of the upper and lower diagrams, portions having the same field-intensity are illustrated with the same hatching. As illustrated in Fig. 4, when the bending loss is approximately 10 dB/m, fields of light are concentrated in the core portion, and it is possible to transmit the power of light such that a loss is sufficiently small. When the bending loss is approximately 100 dB/m, fields of light are dispersed within the HF, but are also present in the core portion, and thus it is possible to transmit power of light practically for optical communications or for delivery of high-power light. When the bending loss of the HF is approximately 250 dB/m, practical transmission of power of light is possible similarly to the case in which the bending loss is 100 dB/m.

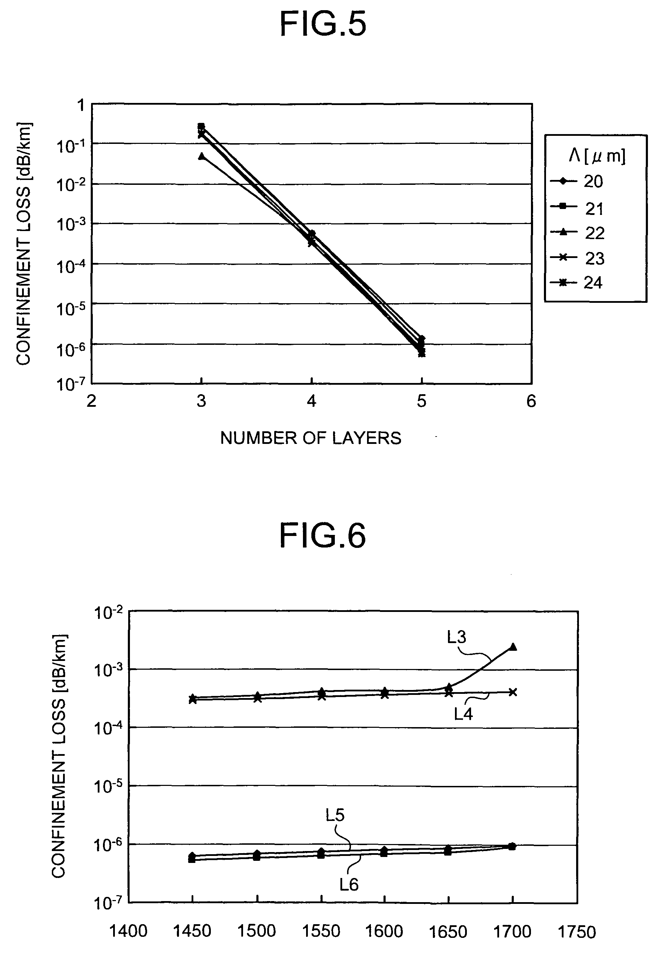

The confinement loss is explained next. Fig. 5 depicts a relationship between the number of hole layers and the confinement loss at a wavelength of 1550 nanometers when A is changed in the HF 10 illustrated in Fig. 1 and in HFs having a structure similar to that of the HF 10 but having three or four hole layers differently from the HF 10. In Fig. 5, d/A of each HF is fixed at 0.43. As illustrated in Fig. 5, when A is changed in a range of 20 to 24 micrometers, the confinement loss does not change so much, but the confinement loss decreases when the number of hole layers increases.

As illustrated in Fig. 5, in the HF 10 having five hole layers, the confinement loss is very small at about approximately 10⁻⁶ dB/km. The transmission loss in a conventional quartz glass optical fiber demonstrating a single mode operation is at least 0.195 dB/km. Therefore, in the HF 10, the confinement loss is negligibly small relative to the transmission loss, and thus does not affect the transmission loss. Further, as illustrated in Fig. 5, for the HFs having a structure similar to that of the HF 10, it is preferable if the number of hole layers is made equal to or greater than four, because the confinement loss becomes 10⁻³ dB/km, that is, smaller than 0.001 dB/km, which is sufficiently small to not substantially affect the transmission loss. The number of hole layers may be greater than five, but it is preferable if the number of hole layers is equal to or less than seven, as the total number of holes to be formed would then become equal to or less than 200, facilitating the manufacture.

While Fig. 5 depicts the confinement loss at the wavelength of 1550 nanometers, the confinement loss is dependent on the wavelength. Fig. 6 depicts a relationship between the wavelength and the confinement loss in the HF illustrated in Fig. 5. A line L3 indicates a case where the number of hole layers is four and A is 22 micrometers, and a line L4 indicates a case where the number of hole layers is four and A is 23 micrometers. Lines L5 and L6 each indicate a case where the number of hole layers is five in the HF 10. In the case indicated by the line L5, A is 22 micrometers, and in the case indicated by the line L6, A is 23 micrometers. As illustrated in Fig. 6, when the number of hole layers is equal to or greater than four, the confinement loss becomes equal to or less than 0.001 dB/km in a range of wavelength of 1450 to 1650 nanometers, not only at the wavelength of 1550 nanometers. Accordingly, the confinement loss is sufficiently small in a wide wavelength range including the C band (approximately 1530 to 1565 nanometers) and the L band (approximately 1565 to 1630 nanometers) used in optical communications.

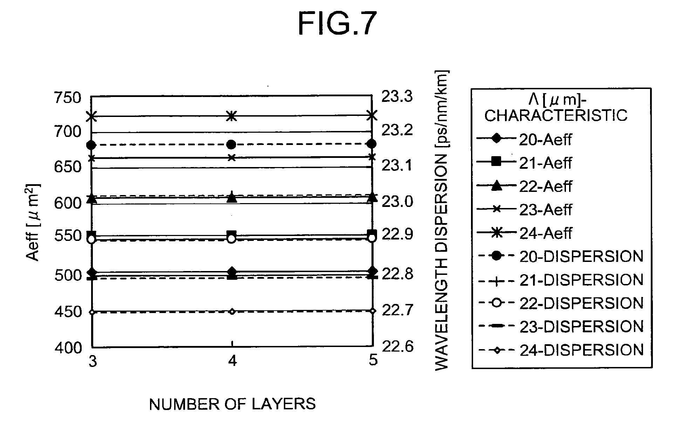

As illustrated in Fig. 5, the confinement loss of the HF changes largely depending on the number of hole layers. However, the changes in the effective core area and a wavelength dispersion value depending on the number of hole layers are small. Fig. 7 depicts a relationship between the number of hole layers, and the effective core area and wavelength dispersion at the wavelength of 1550 nanometers when A is changed in the HF illustrated in Fig. 5. In Fig. 7, notations in the graph legends represent values of A and corresponding characteristics. For example, in the graph legends, the notation of "20-Aeff" refers to the effective core area when A is 20 micrometers. The notation of "20-dispersion" refers to the wavelength dispersion when A is 20 micrometers. As illustrated in Fig. 7, in a range of 20 to 24 micrometers of A, even if A is changed, the effective core area and the wavelength dispersion do not change so much. The absolute value of the wavelength dispersion is equal to or smaller than 24 ps/nm/km, which is a value suppressed as with a standard single-mode optical fiber for optical communications.

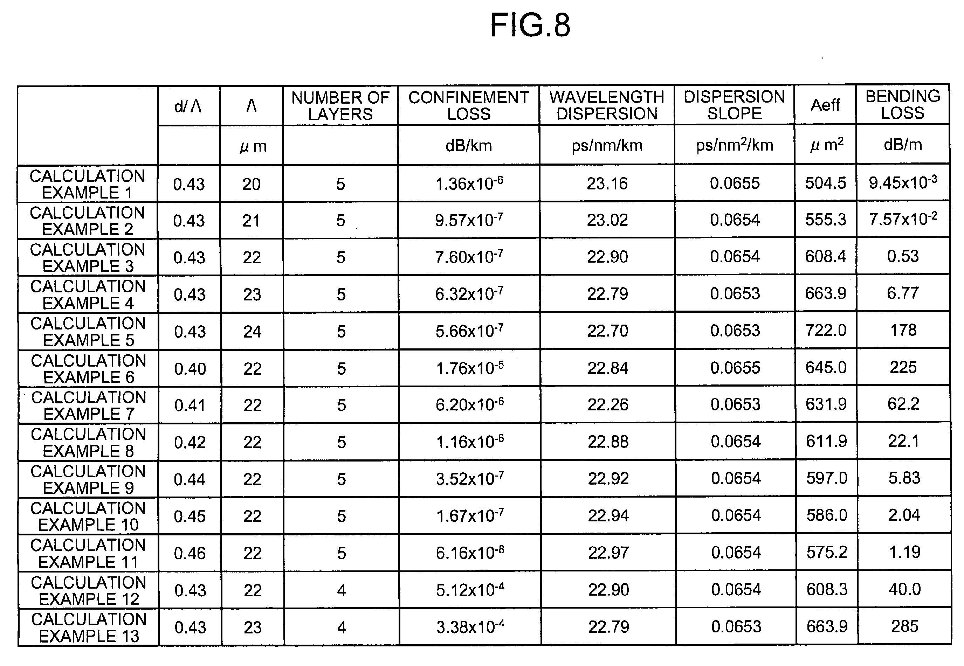

More specific calculation results using the FEM simulation are described next. Fig. 8 depicts d/A, A, and the number of hole layers, which are design parameters for HFs for calculation examples 1 to 13, and optical characteristics of each HF, which are calculated using the FEM simulation. The optical characteristics illustrated in Fig. 8 are values at the wavelength of 1550 nanometers. As illustrated in Fig. 8, the HFs in the calculation examples 1 to 13 have d/A of 0.43 ± 0.03 and A of 20 to 24 micrometers, and thus all have the V values illustrated in Fig. 2 equal to or smaller than 2.5 and substantially demonstrate a single-mode operation. Further, the HFs in the calculation examples 1 to 13 all achieve an effective core area equal to or larger than 500 µm², a bending loss equal to or smaller than 250 dB/m, a confinement loss equal to or smaller than 0.001 dB/m, and a wavelength dispersion having an absolute value equal to or smaller than 24 ps/nm/km. Particularly, the HFs in the calculation examples 1 to 4 and 9 to 11 having A equal to or smaller than 23 micrometers, d/A equal to or larger than 0.43, and five or more layers achieve a bending loss equal to or smaller than 10 dB/m.

### (Examples 1 and 2)

As Examples 1 and 2 of the present invention, HFs made of pure silica glass and having a structure similar to that of the HF 10 illustrated in Fig. 1 were manufactured by a stack-and-draw method. The design parameters of d/A, A, and the number of hole layers used for Example 1 were the values of the calculation example 3 illustrated in Fig. 8, and those for Example 2 were the values of the calculation example 4.

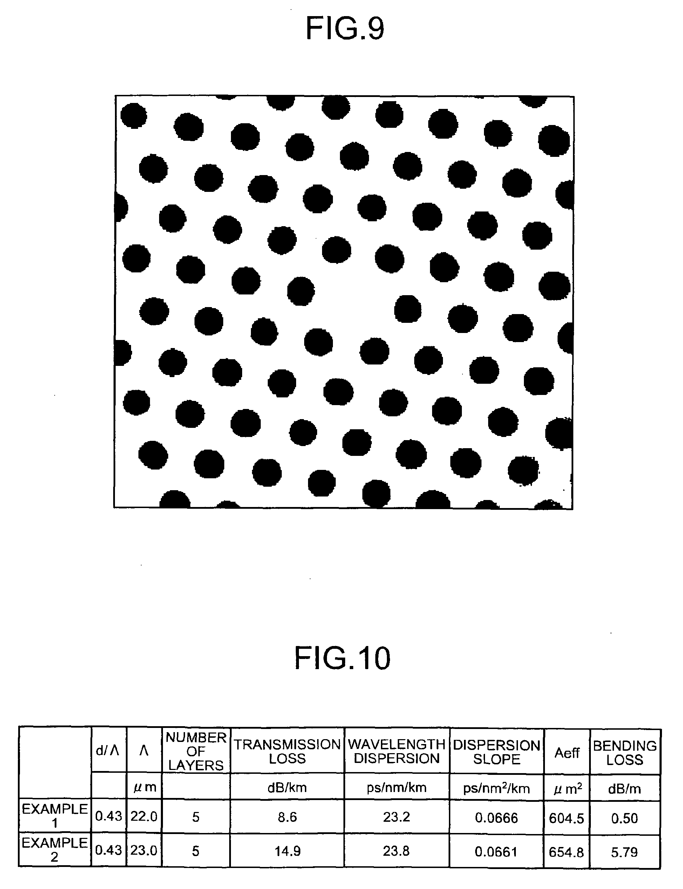

Fig. 9 is a photograph of a cross-sectional structure of the HF according to Example 1 that was manufactured. In Fig. 9, black portions represent holes. Further, Fig. 10 depicts the design parameters and measured optical characteristics of the HFs according to Examples 1 and 2. The optical characteristics illustrated in Fig. 10 are values all obtained when the wavelength was 1550 nanometers. As illustrated in Fig. 10, it has been confirmed that the optical characteristics of the HFs according to Examples 1 and 2 were very close to the optical characteristics obtained by the simulation calculation illustrated in Fig. 8. As a result of measuring fields of light transmitted through the HFs according to Examples 1 and 2, it has been confirmed that no mode other than a fundamental mode was present and that the HFs according to Examples 1 and 2 demonstrated a single-mode operation. Transmission losses in the HFs according to Examples 1 and 2 were 8.6 dB/km and 14.9 dB/km, respectively, which were sufficiently larger than confinement losses predicted by calculations. Therefore, in the HFs according to Examples 1 and 2, it is considered that the confinement losses hardly affect the transmission losses.

### INDUSTRIAL APPLICABILITY

As described above, the holey fiber according to the present invention is useful for optical communications or for power delivery or the like, and is particularly suitable for uses in transmission of high-power light.

### EXPLANATIONS OF LETTERS OR NUMERALS

- 10: HF
- 11: core portion
- 12: cladding portion
- 13: hole
- L: triangular lattice
- L1 to L6: line

## Claims

1. A holey fiber comprising:
a core portion positioned at a center; and
a cladding portion positioned around a periphery of the core portion and including holes formed in layers around the core portion, wherein
the holes are arranged to form a triangular lattice, and
when a diameter of each hole is d [µm] and a lattice constant of the triangular lattice is A [µm],
d/A is in a range of 0.43 ± 0.03,
A is 20 to 24 micrometers,
a single-mode operation is demonstrated at a wavelength of 1550 nanometers, and
an effective core area is equal to or larger than 500 µm² at the wavelength of 1550 nanometers.

2. The holey fiber according to claim 1, wherein d/A is in a range of 0.43 ± 0.02.

3. The holey fiber according to claim 1 or 2, wherein the number of the layers of holes is equal to or greater than four.

4. The holey fiber according to claim 3, wherein a confinement loss at a wavelength equal to or less than 1650 nanometers is equal to or less than 0.001 dB/km.

5. The holey fiber according to any one of claims 1 to 4, wherein an absolute value of wavelength dispersion at the wavelength of 1550 nanometers is equal to or smaller than 24 ps/nm/km.

6. The holey fiber according to any one of claims 1 to 4, wherein
A is equal to or less than 23 micrometers,
d/A is equal to or greater than 0.43,
the number of the layers is equal to or greater than five, and
a bending loss at a diameter of 100 millimeters at the wavelength of 1550 nanometers is equal to or less than 10 dB/m.
